# EUROPÄISCHE PATENTSCHRIFT

(11) **EP 1 883 755 B1**
(45) Veröffentlichungstag und Bekanntmachung des Hinweises auf die Patenterteilung: **07.01.2009**
(21) Anmeldenummer: 06724699.1
(22) Anmeldetag: 04.05.2006
(51) Int. Cl.: F16C 19/38, F16C 35/063

(54) **LAGERANORDNUNG**
BEARING ARRANGEMENT
DISPOSITIF DE ROULEMENT

(30) Priorität: 17.05.2005 DE 102005023343
(43) Veröffentlichungstag der Anmeldung: 06.02.2008
(73) Patentinhaber: SAF-HOLLAND GmbH, 63856 Bessenbach-Keilberg (DE)
(72) Erfinder: SCHEWERDA, Steffen, 63739 Aschaffenburg (DE)
(74) Vertreter: KEIL & SCHAAFHAUSEN Patentanwälte
(86) Internationale Anmeldenummer: PCT/EP2006/004144
(87) Internationale Veröffentlichungsnummer: WO 2006/122653

(56) Entgegenhaltungen:
- US-A- 4 433 877
- PATENT ABSTRACTS OF JAPAN Bd. 2003, Nr. 12, 5. Dezember 2003 (2003-12-05) -& JP 2005 090613 A (NSK LTD), 7. April 2005 (2005-04-07)
- PATENT ABSTRACTS OF JAPAN Bd. 2003, Nr. 12, 5. Dezember 2003 (2003-12-05) -& JP 2005 106215 A (KOYO SEIKO CO LTD), 21. April 2005 (2005-04-21)
- PATENT ABSTRACTS OF JAPAN Bd. 2000, Nr. 09, 13. Oktober 2000 (2000-10-13) -& JP 2000 168306 A (NTN CORP), 20. Juni 2000 (2000-06-20)

## Beschreibung

Die Erfindung betrifft eine Lageranordnung, insbesondere eine Radlageranordnung, mit zwei Wälzlagern, die jeweils einen auf einen zylindrischen Lagersitz eines Achsstummels oder dgl. aufsteckbaren Lagerinnenring mit einer gegenüber dem Lagersitz geneigt verlaufenden Innenlaufbahn, einen Lageraußenring mit einer ebenfalls gegenüber dem Lagersitz geneigt verlaufenden Außenlaufbahn und zwischen den Innen- und Außenlaufbahnen aufgenommene Wälzkörper aufweisen, wobei die Lagerinnenringe mit einer auf dem Achsstummel oder dgl. befestigbaren Achsmutter mit einer stirnseitigen Abstützfläche gegen einen Absatz des Achsstummels oder dgl. festspannbar sind.

Bei Wälzlagern ist es allgemein üblich, dass die axialen Anlageflächen der Lagerinnenringe rechtwinklig zu dem zylindrischen Lagersitz eines Wellenendes, Achsstummels oder dgl. angeordnet sind. Diese Anlageflächen sind fertigungstechnisch besonders einfach herstellbar. Wenn bei einer Lageranordnung mit zwei Wälzlagern die beiden Lagerinnenringe nicht gegeneinander verspannt sind, bringt diese Ausführung der Anlageflächen zunächst keine technischen Nachteile mit sich. Dies setzt jedoch voraus, dass die Wälzlager über Achsmuttern auf ein definiertes Lagerspiel einzustellen sind. Hierzu müssen die Achsmuttern in ihrer Position nach dem Einstellen des Lagerspiels mit Hilfe zusätzlicher Maßnahmen gegen ein Verdrehen gesichert werden.

Da sowohl bei der Erstmontage als auch bei späteren Service- oder Reparaturarbeiten Fehler bei der Einstellung der Radlager auftreten können, die im anschließenden Fahrbetrieb zu einem vorzeitigen Ausfall der Lager führen können, werden derartige über Achsmuttern auf ein definiertes Lagerspiel einstellbare Wälzlager vielfach nicht mehr als zeitgemäß erachtet.

Bei moderneren Lageranordnungen mit zwei Wälzlagern liegen die Lagerinnenringe in der Mitte der Lageranordnung aneinander an und sind über eine Achsmutter axial gegeneinander verspannt. Dies führt jedoch zu einer Verwölbung der Lagerinnenringe, die auch eine Deformation der Innenlaufbahnen der Lagerinnenringe mit sich bringt. Da selbst kleine Abweichungen der konstruktiv festgelegten Laufbahngeometrie einen ungünstigen Einfluss auf die Lagerlebensdauer haben, wird diese Verwölbung der Lagerinnenringe als negativ empfunden.

Weiter sind auch Wälzlageranordnungen bekannt, bei welchen sich die Lagerinnenringe an einer kegelmantelförmigen Achsschulter abstützen. Die Lagerinnenringe weisen dabei entsprechende Abstützflächen auf, die sich von ihrem lagersitzseitigen Ende zu dem lageraußenringseitigen Ende von dem jeweils anderen Legerinnenring entfernen. Dieser Aufbau ermöglicht es, den Lagerinnenring gegenüber dem Achsstummel oder dgl. zu zentrieren, wodurch die Gefahr von Tribokorrossion reduziert werden kann. Zudem wirkt sich der kegelmantelförmige Übergang am Achsstummel positiv hinsichtlich der ertragbaren Beanspruchungen aus.

Wenn zwei derartig ausgebildete Lagerinnenringe zwischen einer kegelmantelförmigen Achsschulter und einer Achsmutter aneinander anliegend axial gegeneinander verspannt sind, tritt der oben beschriebene Effekt einer Verwölbung der Lagerinnenringe und einer entsprechenden Deformation der Innenlaufbahnen verstärkt auf.

Aufgabe der vorliegenden Erfindung ist es demgegenüber, eine Lageranordnung der eingangs genannten Art bereitzustellen, welche mit geringen Fehlermöglichkeiten montierbar ist und eine hohe Lebensdauer der Wälzlager ermöglicht.

Diese Aufgabe wird erfindungsgemäß im Wesentlichen dadurch gelöst, dass zumindest einer der Lagerinnenringe eine Abstützfläche aufweist, die gegenüber dem Lagersitz um weniger als 90° geneigt verläuft, wobei sich die Abstützfläche von ihrem lagersitzseitigen Ende zu dem lageraußenringseitigen Ende an den jeweils anderen Lagerinnenring annähert. Der Lagerinnenring weist folglich eine kegelmantelförmige Abstützfläche auf, die sich in Richtung auf den Lagersitz hin verjüngt. Diese Ausrichtung der Abstützfläche der Lagerinnenringe wirkt dem oben beschriebenen Effekt des Aufwölbens der Lagerinnenringe bei axialer Verspannung entgegen. Die durch die axiale Verspannung der Lagerinnenringe hervorgerufene Verformung der Innenlaufbahnen kann auf diese Weise minimiert werden, was sich positiv auf die Lebensdauer der Wälzlager auswirkt. Gleichzeitig werden die Fehlermöglichkeiten bei der Montage der erfindungsgemäßen Lageranordnung reduziert, da das Lagerspiel nicht über Achsmuttern eingestellt werden muss.

In Weiterbildung dieses Erfindungsgedankens ist es vorgesehen, dass beide Lagerinnenringe eine Abstützfläche aufweisen, die gegenüber dem Lagersitz um weniger als 90° geneigt verlaufen, und dass die Achsmutter und der Absatz des Achsstummels oder dgl. Kontaktflächen aufweisen, die derart an die Neigung der Abstützflächen angepasst sind, dass diese flächig an den Kontaktflächen anliegen. Dies ermöglicht es, dass bei beiden Lagerinnenringen die Verformungen aufgrund der axialen Verspannung minimiert werden, wodurch die Lebensdauer der Wälzlager steigt.

Vorzugsweise verläuft zumindest die Abstützfläche eines der Lagerinnenringe in einem Winkel von 90° oder zumindest näherungsweise 90° zu der Innenlaufbahn des jeweiligen Lagerinnenringes. Alternativ hierzu kann zumindest die Abstützfläche eines der Lagerinnenringe in einem Winkel von 90° oder zumindest näherungsweise 90° zu den Rotationsachsen der Wälzkörper des jeweiligen Wälzlagers verlaufen. Die durch die axiale Verspannung der Lagerinnenringe auftretende Druckspannung verläuft somit parallel oder zumindest im Wesentlichen parallel zu den Innenlaufbahnen, so dass allenfalls eine Stauchung, nicht jedoch eine für die Lebensdauer besonders ungünstige Verwölbung der Innenlaufbahnen auftreten kann.

Erfindungsgemäß ist es vorgesehen, dass die Abstützfläche von zumindest einem der Lagerinnenringe gegenüber dem Lagersitz um etwa 45° bis etwa 85°, insbesondere um etwa 60° bis etwa 80° und besonders bevorzugt um etwa 75° geneigt verläuft. Dies ermöglicht einerseits eine Zentrierung der Lagerinnenringe auf dem Achsstummel oder dgl. und verlängert gleichzeitig die Lebensdauer der Wälzlager.

Wenn die Lageraußenringe einstückig mit einer Radnabe ausgebildet sind, bspw. indem die Außenlaufbahnen unmittelbar in eine Radnabe eingeschliffen sind, ist ein besonders einfacher Aufbau einer kompakten Lageanordnung möglich. Alternativ hierzu können die Lageraußenringe auch separate Bauteile sein, die mit einer Radnabe oder dgl. verbunden sind, bspw. indem die Lageraußenringe in die Radnabe eingepresst sind.

Hierbei wird es bevorzugt, wenn in den Wälzlagern ein langlebiger Schmierstoff vorgesehen ist, der die tribologischen Bedingungen in den Wälzlagern verbessert. Um dabei das Austreten des Schmierstoffes und ein Eindringen von Schmutz zu vermeiden, sind die beiden Stirnseiten der Wälzlager bevorzugt mit einer die Lager abdichtenden Radialwellendichtung versehen.

Zur Aufnahme der bspw. bei einem Radlager eines Fahrzeugs auftretenden Belastungen hat es sich als vorteilhaft erwiesen, wenn die beiden Wälzlager in O-Anordnung zueinander ausgerichtet sind. Vorzugsweise sind die beiden Wälzlager dabei Kegelrollenlager.

Weiterbildungen, Vorteile und Anwendungsmöglichkeiten der Erfindung ergeben sich auch aus der nachfolgenden Beschreibung von Ausführungsbeispielen und der Zeichnung.

Es zeigen schematisch:
- Fig. 1: in Schnittansicht eine Lageranordnung gemäß einer ersten Ausführungsform der Erfindung und
- Fig. 2: in Schnittansicht ein Detail einer Lageranordnung gemäß einer zweiten Ausführungsform der Erfindung.

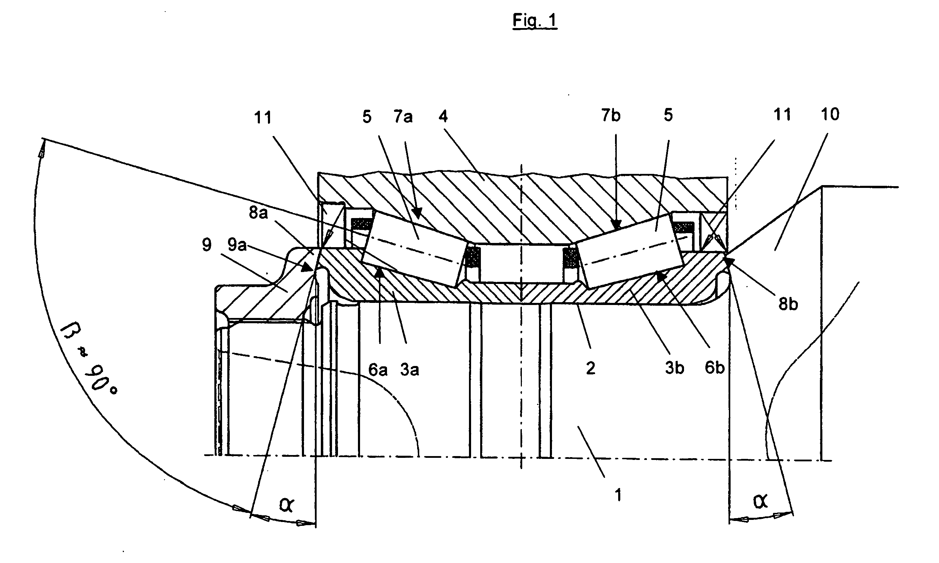

Die in Fig. 1 dargestellte Radlageranordnung ist im Wesentlichen durch zwei Wälzlager gebildet, die auf einem Achsstummel 1 oder dgl. angeordnet sind. Hierzu weist der Achsstummel 1 einen zylindrischen Bereich auf, der einen Lagersitz 2 für die beiden Wälzlager bildet.

Die Wälzlager weisen jeweils einen Lagerinnenring 3a bzw. 3b, einen Lageraußenring 4 sowie in der dargestellten Ausführungsform als Kegelrollen ausgebildete Wälzkörper 5 auf. Die Wälzkörper 5 rollen auf Innenlaufbahnen 6a, 6b, die in den Lagerinnenringen 3a bzw. 3b geneigt zu dem Lagersitz 2 vorgesehen sind. In gleicher Weise rollen die Wälzkörper 5 auch auf Außenlaufbahnen 7a, 7b ab, die ebenfalls geneigt zu dem Lagersitz 2 in dem Lageraußenring 4 ausgebildet sind.

Die beiden Lagerinnenringe 3a, 3b stoßen aneinander an und sind gemeinsam in axialer Richtung verspannt. Hierzu sind an den Stirnseiten der Lagerinnenringe Abstützflächen 8a bzw. 8b vorgesehen. An diesen liegen auf der in Fig. 1 linken Seite eine Achsmutter 9 mit einer Kontaktfläche 9a und auf der in der Fig. 1 rechten Seite ein Absatz 10 des Achsstummels 1 mit einer Kontaktfläche 10a an den Abstützflächen 8a bzw. 8b an.

Sowohl die Abstützflächen 8a, 8b der Lagerinnenringe 3a bzw. 3b als auch die Kontaktflächen 9a und 10a der Achsmutter 9 bzw. des Absatzes 10 verlaufen dabei nicht unter einem rechten Winkel zu dem Lagersitz 2. Vielmehr verlaufen die Abstützflächen und die Kontaktflächen, die in dem in der Fig. 1 dargestellten axial verspannten Zustand der Lageranordnung flächig aneinander anliegen, um einen Winkel α gegenüber einer senkrecht zu dem Lagersitz stehenden Ebene geneigt. Dabei sind die Abstützflächen 8a und 8b derart ausgerichtet, dass sie sich von ihrem lagersitzseitigen, in der Fig. 1 unteren Ende zu dem lageraußenringseitigen, in der Fig. 1 oberen Ende an den jeweils anderen Lagerinnenring annähern. Die Abstützflächen 8a, 8b sind folglich Kegelmantelflächen, die in Richtung auf den Lagersitz 2 spitz zulaufen. Die Kontaktflächen 9a und 10a sind dabei in ihrer Ausrichtung an die Abstützflächen 8a und 8b angepasst, so dass diese flächig aneinander anliegen können.

Wie durch den Winkel β in Fig. 1 angedeutet, verlaufen die Abstützflächen 8a bzw. 8b rechtwinklig zu den Rotationsachsen der Wälzkörper 5. Die durch die axiale Vorspannung der Lagerinnenringe 3a und 3b erzeugte Belastung verläuft somit in den Lagerinnenringen parallel zu den Rotationsachsen der Wälzlager 5.

In der in Fig. 1 dargestellten Ausführungsform sind die Außenlaufbahnen 7a und 7b unmittelbar in eine nur angedeutete Radnabe eingeschliffen, die somit gleichzeitig den Lageraußenring 4 bildet.

Die Lageranordnung kann mit einem langlebigen Schmierstoff gefüllt und an ihren Stirnseiten durch Radialwellendichtungen 11 abgedichtet sein, um das Austreten des Schmierstoffs und das Eindringen von Schmutz zu unterbinden.

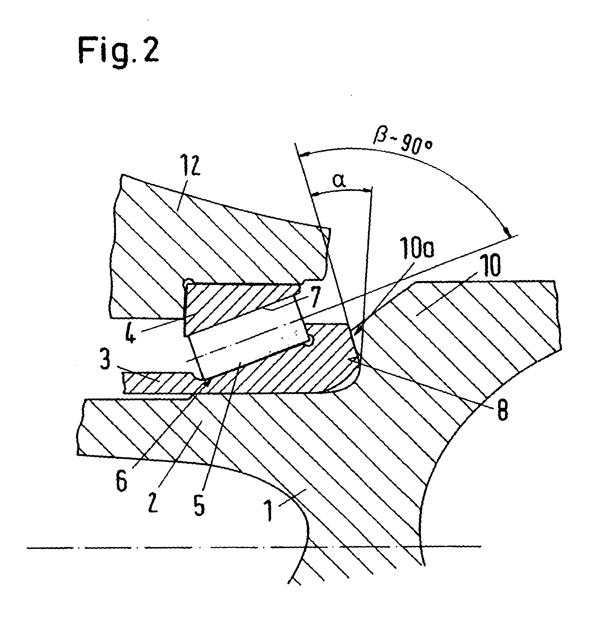

Eine zweite Ausführungsform der Erfindung ist in Fig. 2 dargestellt. Die Lagerandordnung besteht wiederum aus zwei axial gegeneinander verspannten Wälzlagern, von denen in Fig. 2 nur eines gezeigt ist. Wie oben unter Bezugnahme auf Fig. 1 erläutert, besteht das Wälzlager aus einem auf einem zylindrischen Lagersitz 2 eines Achsstummels 1 aufgenommenen Lagerinnenring 3 und einem Lageraußenring 4, zwischen denen ein als Kegelrolle ausgebildeter Wälzkörper 5 angeordnet ist. In dem Lagerinnenring 3 und dem Lageraußenring 4 sind jeweils Innenlaufbahnen 6 und Außenlaufbahnen 7 ausgebildet.

Der Lagerinnenring 3 weist wiederum eine um weniger als 90° gegenüber dem Lagersitz 2 geneigt verlaufende Abstützfläche 8 auf, die in dem in der Figur gezeigten axial verspannten Zustand der Lageranordnung flächig an einer entsprechend geneigten Kontaktfläche 10a eines Absatzes 10 des Achsstummels 1 anliegt.

Abweichend von der oben unter Bezugnahme auf Fig. 1 erläuterten Ausführungsform ist der Lageraußenring 4 der Ausführungsform nach Fig. 2 nicht einstückig mit der Radnabe 12 ausgebildet, sondern als ein separates Bauteil mit dieser verbunden, bspw. in diese eingepresst.

Durch die Neigung der Abstützflächen 8a bzw. 8b der Lagerinnenringe sowie die entsprechende Neigung der Kontaktflächen 9a bzw. 10a kann die bei einer axialen Verspannung der Lagerinnenringe durch Festziehen der Achsmutter 9 gegen den Absatz 10 bisher auftretende Verwölbung der Lagerinnenringe vermieden werden. Folglich weichen auch die Innenlaufbahnen 6a bzw. 6b in dem in den Figuren dargestellten axial verspannten Zustand der Lageranordnung nicht von ihrer konstruktiv festgelegten Laufbahngeometrie ab. Hierdurch wird die Lebensdauer der Lageranordnung erheblich gesteigert.

In Fig. 1 sind die beiden Wälzlager in O-Anordnung zueinander ausgerichtet. In Abhängigkeit der Einsatzbedingungen und der Beanspruchungen können die Wälzlager jedoch auch in X-Anordnung oder als Doppelschräglager ausgebildet sein. Zudem können an Stelle der in den Figuren gezeigten Kegelrollenlager auch beliebige andere Wälzlager, bspw. Nadellager, Rollenlager, Kugellager oder dgl. eingesetzt werden.

### Bezugszeichenliste

- 1: Achsstummel
- 2: Lagersitz
- 3, 3a, 3b: Lagerinnenring
- 4: Lageraußenring
- 5: Wälzkörper
- 6, 6a, 6b: Innenlaufbahn
- 7, 7a, 7b: Außenlaufbahn
- 8, 8a, 8b: Abstützfläche
- 9: Achsmutter
- 9a: Kontaktfläche
- 10: Absatz
- 10a: Kontaktfläche
- 11: Radialwellendichtung
- 12: Radnabe

## Patentansprüche

1. Lageranordnung, insbesondere Radlageranordnung, mit zwei Wälzlagern, die jeweils einen auf einen zylindrischen Lagersitz (2) eines Achsstummels (1) oder dgl. aufsteckbaren Lagerinnenring (3, 3a, 3b) mit einer gegenüber dem Lagersitz (2) geneigt verlaufenden Innenlaufbahn (6, 6a, 6b), einen Lageraußenring (4) mit einer ebenfalls gegenüber dem Lagersitz (2) geneigt verlaufenden Außenlaufbahn (7, 7a, 7b) und zwischen den Innen- und Außenlaufbahnen aufgenommene Wälzkörper (5) aufweisen, wobei die Lagerinnenringe (3, 3a, 3b) mit einer auf dem Achsstummel (1) oder dgl. befestigbaren Achsmutter (9) mit einer stirnseitigen Abstützfläche (8, 8a, 8b) gegen einen Absatz (10) des Achsstummels (1) oder dgl. festspannbar sind, **dadurch gekennzeichnet, dass** zumindest einer der Lagerinnenringe (3, 3a, 3b) eine Abstützfläche (8, 8a, 8b) aufweist, die gegenüber dem Lagersitz (2) um weniger als 90° geneigt verläuft, wobei sich die Abstützfläche (8, 8a, 8b) von ihrem lagersitzseitigen Ende zu dem lageraußenringseitigen Ende an den jeweils anderen Lagerinnenring (3, 3a, 3b) annähert.

2. Lageranordnung nach Anspruch 1, **dadurch gekennzeichnet, dass** beide Lagerinnenringe (3, 3a, 3b) eine Abstützfläche (8, 8a, 8b) aufweisen, die gegenüber dem Lagersitz (2) um weniger als 90° geneigt verlaufen, und dass die Achsmutter (9) und der Absatz (10) des Achsstummels (1) oder dgl. Kontaktflächen (9a, 10a) aufweisen, die derart an die Neigung der Abstützflächen (8, 8a, 8b) angepasst sind, dass diese flächig an den Kontaktflächen anliegen.

3. Lageranordnung nach einem der Ansprüche 1 oder 2, **dadurch gekennzeichnet, dass** zumindest die Abstützfläche eines der Lagerinnenringe (3, 3a, 3b) in einem Winkel von 90° oder zumindest näherungsweise 90° zu der Innenlaufbahn (6, 6a, 6b) des jeweiligen Lagerinnenringes (3, 3a, 3b) verläuft.

4. Lageranordnung nach einem der Ansprüche 1 oder 2, **dadurch gekennzeichnet, dass** zumindest die Abstützfläche (8, 8a, 8b) eines der Lagerinnenringe (3, 3a, 3b) in einem Winkel von 90° oder zumindest näherungsweise 90° zu den Rotationsachsen der Wälzkörper (5) des jeweiligen Wälzlagers verläuft.

5. Lageranordnung nach einem der Ansprüche 1 bis 4, **dadurch gekennzeichnet, dass** die Abstützfläche von zumindest einem der Lagerinnenringe (3, 3a, 3b) gegenüber dem Lagersitz (2) um einen Winkel (α) von etwa 45° bis etwa 85°, insbesondere um etwa 60° bis etwa 80°, besonders bevorzugt um etwa 75° geneigt verläuft.

6. Lageranordnung nach einem der Ansprüche 1 bis 5, **dadurch gekennzeichnet, dass** die Lageraußenringe (4) einstückig mit einer Radnabe (4) ausgebildet sind, und dass die Außenlaufbahnen (7a, 7b) in die Radnabe (4) eingeschliffen sind.

7. Lageranordnung nach einem der Ansprüche 1 bis 5, **dadurch gekennzeichnet, dass** die Lageraußenringe (4) mit einer Radnabe (12) verbunden sind, insbesondere in diese eingepresst sind.

8. Lageranordnung nach einem der Ansprüche 1 bis 7, **dadurch gekennzeichnet, dass** die beiden Wälzlager in O-Anordnung zueinander ausgerichtet sind.

9. Lageranordnung nach einem der Ansprüche 1 bis 8, **dadurch gekennzeichnet, dass** die beiden Wälzlager Kegelrollenlager sind.

## Claims

1. A bearing arrangement, particularly a wheel bearing arrangement, with two antifriction bearings, each of which comprising a bearing inner race (3, 3a, 3b), which can be placed onto a cylindrical bearing seat (2) of an axle stub (1) or the like and which has an inner raceway (6, 6a, 6b) running at an angle to the bearing seat (2), a bearing outer race (4) having an outer raceway (7, 7a, 7b) also running at an angle to the bearing seat (2), and rolling bodies (5) accommodated between the inner and outer raceways, the bearing inner races (3, 3a, 3b) being able to be clamped against a projection (10) of the axle stub (1) by means of an axle nut (9), which can be fastened to the axle stub (1) or the like and which has a supporting surface (8, 8a, 8b) on the front face, **characterized in that** at least one of the bearing inner races (3, 3a, 3b) has a supporting surface (8, 8a, 8b) which runs at an angle of less than 90° to the bearing seat (2), the supporting surface (8, 8a, 8b) approaching, from its end situated on the bearing seat side to its end situated on the bearing outer race side, the respective other bearing inner race (3, 3a, 3b).

2. The bearing arrangement according to Claim 1, **characterized in that** the two bearing inner races (3, 3a, 3b) have a supporting surface (8, 8a, 8b), which run at an angle of less than 90° to the bearing seat (2), and that the axle nut (9) and the projection (10) of the axle stub (1) or the like have contact surfaces (9a, 10a), which are adapted to the inclination of the supporting surfaces (8, 8a, 8b) such that the latter lie flat on the contact surfaces.

3. The bearing arrangement according to any of Claims 1 or 2, **characterized in that** at least the supporting surface of one of the bearing inner races (3, 3a, 3b) runs at an angle of 90° or at least approximately 90° to the inner raceway (6, 6a, 6b) of the respective bearing inner race (3, 3a, 3b).

4. The bearing arrangement according to any of Claims 1 or 2, **characterized in that** at least the supporting surface (8, 8a, 8b) of one of the bearing inner races (3, 3a, 3b) runs at an angle of 90° or at least approximately 90° to the rotation axes of the rolling bodies (5) of the respective antifriction bearing.

5. The bearing arrangement according to any of Claims 1 to 4, **characterized in that** the supporting surface of at least one of the bearing inner races (3, 3a, 3b) runs at an angle (α) of approximately 45° to approximately 85°, in particular of approximately 60° to approximately 80°, particularly preferably of approximately 75°, to the bearing seat (2).

6. The bearing arrangement according to any of Claims 1 to 5, **characterized in that** the bearing outer races (4) are formed in one piece with a wheel hub (4) and that the outer raceways (7a, 7b) are ground into the wheel hub (4).

7. The bearing arrangement according to any of Claims 1 to 5, **characterized in that** the bearing outer races (4) are connected with a wheel hub (12), in particular are pressed into the latter.

8. The bearing arrangement according to any of Claims 1 to 7, **characterized in that** the two antifriction bearings are aligned in O-arrangement to each other.

9. The bearing arrangement according to any of Claims 1 to 8, **characterized in that** the two antifriction bearings are tapered-roller bearings.

## Revendications

1. Dispositif de roulement, notamment dispositif de roulement de roue, comportant deux paliers de roulement, qui présentent respectivement une bague intérieure de roulement (3,3a,3b) pouvant être enfoncée sur un siège de roulement (2) cylindrique d'une fusée de roue (1) ou similaire, comportant une voie de roulement interne (6,6a,6b) s'étendant en inclinaison par rapport au siège de roulement (2), une bague externe de roulement (4) comportant une voie de roulement externe (7,7a,7b) s'étendant également à inclinaison par rapport au siège de roulement (2) et des corps de roulement (5) logés entre les voies de roulement interne et externe, moyennant quoi les bagues internes de roulement (3,3a,3b) sont bloquées par serrage avec un écrou de fusée (9) pouvant être fixé sur la fusée de roue (1) ou similaire, comportant une surface d'appui (8,8a,8b) frontale contre un épaulement (10) de la fusée de roue (1) ou similaire, **caractérisé en ce que** au moins une des bagues internes de roulement (3,3a,3b) présente une surface d'appui (8,8a,8b), qui s'étend en inclinaison de moins de 90° par rapport au siège de roulement (2), moyennant quoi la surface d'appui (8,8a,8b) se rapproche de l'autre bague interne de roulement (3,3a,3b) respective depuis son extrémité du côté de siège de roulement regardant vers l'extrémité du côté de bague externe de roulement.

2. Dispositif de roulement selon la revendication 1, **caractérisé en ce que** les deux bagues internes de roulement (3,3a,3b) présentent une surface d'appui (8,8a,8b), qui s'étendent en inclinaison de moins de 90° par rapport au siège de roulement (2) et **en ce que** l'écrou de fusée (9) et l'épaulement (10) de la fusée de roue (1) ou similaire présentent des surfaces de contact (9a,10a), qui sont adaptées à l'inclinaison des surfaces d'appui (8,8a,8b) de telle sore que celles-ci viennent reposer à plat sur les surfaces de contact.

3. Dispositif de roulement selon une des revendications 1 ou 2, **caractérisé en ce que** au moins la surface d'appui d'une des bagues internes de roulement (3,3a,3b) s'étend à un angle de 90° ou d'au moins approximativement 90° par rapport à la voie de roulement interne (6,6a,6b) de la bague interne de roulement (3,3a,3b) respective.

4. Dispositif de roulement selon une des revendications 1 ou 2, **caractérisé en ce que** au moins la surface d'appui (8,8a,8b) d'une des bagues internes de roulement (3,3a,3b) s'étend à un angle de 90° ou d'au moins approximativement 90° par rapport aux axes de rotation des corps de roulement (5) du palier de roulement respectif.

5. Dispositif de roulement selon une des revendications 1 à 4, **caractérisé en ce que** la surface d'appui d'au moins une des bagues internes de roulement (3,3a,3b) s'étend en inclinaison par rapport au siège de roulement (2) d'un angle (α) d'environ 45° à environ 85°, notamment d'environ 60° à environ 80°, notamment de manière préférée d'environ 75°.

6. Dispositif de roulement selon une des revendications 1 à 5, **caractérisé en ce que** les bagues externes de roulement (4) sont réalisées en un seul tenant avec un moyeu de roue (4) et **en ce que** les voies de roulement externes (7a,7b) sont meulées dans le moyeu de roue (4).

7. Dispositif de roulement selon une des revendications 1 à 5, **caractérisé en ce que** les bagues externes de roulement (4) sont reliées à un moyeu de roue (12), notamment sont pressées dans celui-ci.

8. Dispositif de roulement selon une des revendications 1 à 7, **caractérisé en ce que** les deux paliers de roulement sont orientés dans une disposition en O l'un par rapport à l'autre.

9. Dispositif de roulement selon un des revendications 1 à 8, **caractérisé en ce que** les deux paliers de roulement sont des roulements à rouleaux coniques.
